# EUROPEAN PATENT APPLICATION

(11) **EP 4 803 244 A1**
(43) Date of publication of application: **09.09.2026**
(21) Application number: 25305301.1
(22) Date of filing: 06.03.2025
(51) Int. Cl.: B23K 26/244, B23K 26/0622, B23K 26/06, B23K 101/42, B23K 103/12

(54) **LASER WELDING METHOD FOR WELDING A FIRST COPPER TRACK ON A SECOND COPPER TRACK**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: PERRIN, Rémi, 35708 RENNES CEDEX 7 (FR)
(74) Representative: Plasseraud IP

(57) **Abstract**

Laser welding method for welding a first copper layer (141, 200) on a second copper layer (140, 301) with a laser beam (110) emitted by a laser welding station from above the first copper layer across a convergent lens (120), wherein height (H) of the convergent lens above said first copper layer (141) is adapted to provide a focal point (F) of said laser beam above the first copper layer in order to provide at least one defocused welding spot (S) on said first copper layer.

## Description

### Technical Field

This disclosure pertains to the field of packaging power electronic devices.

### Background Art

In power electronics, the packaging of power devices is a crucial topic. The package has multitude features in power modules. First, the package provides a sealing and a protection against external conditions such as humidity, dust, etc. In addition, the package provides electrical connections and a thermal path to extract the heat out of the power device. The most common technology to package power devices is to attach dies on a substrate such as a direct copper bonding (DBC) or a lead frame, then connect the top pads by aluminum wires using ultrasonic bonding process. The whole device is then molded with plastic-based materials or placed in a plastic box filled with silicone gel. Then the power module is interconnected to the external components by screws.

An emerging technology is to embed power devices into a multilayer PCB laminate. The power device is inserted in cavities in the multilayer structure and laminated with to form a single assembly. Afterwards, drillings which are most of the time made by laser beam allow to reach the power device pads and connect them by filling the holes with copper which is usually chemically then electrically deposited. Such interconnections are called vias. This technology has been used for converter assembly or used as a fanout for power devices. Based on this assembly process a new category of packaging called prepackaging has been proposed by companies such as GaN systems Inc now part of company Infineon Technologies AG. In contrast to a classical power package, a prepackage does only propose eased access to die interconnection with respect to the creepage and the clearance. A second assembly step, for example by PCB embedding or soldering to a substrate, is required to obtain a functional power module. Prepackage technique provides an intermediate solution between a power module and a bare die with more flexibility. Compatibility with mass production process (wafer level or single die level) is granted which ensures cost-effectiveness of this solution.

The variety of PCB design tools provide the support needed for the design part. The die metallization can be the same for all the dies, e.g. same mask during clean room process for cost reduction, and then adapted during prepackaged step to each customer needs in terms of interconnection and thermal constrain (spreader function). Parallelization is eased and the same package can fit different power levels. Potential of die size shrinkage and gate pad reduction is also a clear advantage of prepackaging. The panelization of the PCB is capable of supporting mass production while handling different designs on a single one. In comparison with transfer molded power module, prepackaged technique is offering large scale production with large parallel production process and is not limited by the mold size. Functionalized prepackage dies of half bridge modules with interconnection adapted to the application and additional features such as sensing, or decoupling can be easily added to the PCB.

The prepackage cells have to be interconnected with the external elements inherent of any power converter such as energy storage, load, and control circuits. Conventionally, the interconnections are made with screwed copper busbars or PCB. This adds a lot of mechanical and electrical parasitic constraints in the converter circuit such as the addition of bolted busbars in order to connect busbars having thick conductive layers with standard PCBs. Such solutions have the drawback of parasitic inductances and may be subject to loosening.

In the case of prepackaged cells the advantage brought by the PCB integration regarding the low parasitic level within the package, would be totally cancelled out by screwed busbar or PCB and would be counterproductive in converters design stage. Therefore, a solution using the recent progress of laser welding is proposed to keep coplanarity of the interconnection outside of the prepackage cell and dealing with high conductive layer thickness ratio. Thus, the parasitic level can be kept minimal, and the advantage brought by the prepackage cell is not degraded by external interconnection.

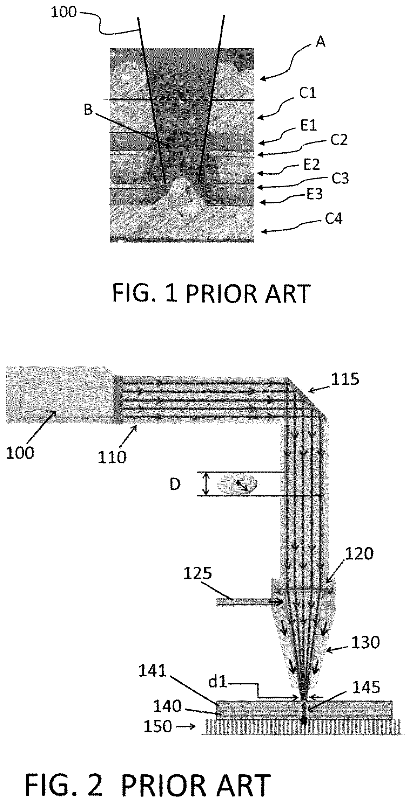

The issue with laser welding in the PCB and busbar field is that in case of parts to be welded having different thicknesses the thinner layer is subject to burning or degradation. Also, laser welding on copper top layer of PCBs with epoxy layers is currently not possible since fusion of the copper layer and burning of the epoxy during laser pulses makes laser welding not compatible with epoxy PCB material. Laser welding of a busbar copper track onto a multilayer PCB with epoxy would burn the multilayer PCB as in figure 1 where burned PCB and melted layers B can be seen when a laser beam 100 is applied to weld the busbar layer A onto a first copper layer C1 of a four layers PCB with copper layers C1, C2, C3 and C4 separated by epoxy layers E1, E2, E3.

### Summary

In view of such problems, the present disclosure proposes a laser welding method for welding electrical interconnections of power electronics equipment comprising a first copper layer on a second copper layer with a laser beam emitted by a laser welding station from above the first copper layer across a convergent lens, wherein a height of the convergent lens above said first copper layer is adapted to provide a focal point of said laser beam above the first copper layer in order to provide at least one defocused welding spot on said first copper layer and wherein the first copper layer is a copper conductor of a busbar and the second copper layer is part of an outer copper layer of a PCB having at least two copper layers separated by a dielectric layer.

Such laser welding method allows interfacing of prepackaged cells with an external part of the converter system without increasing the electrical parasitic level.

In the proposed method, by adjusting the heigh of the convergent lens versus the surface of the first copper track, the diameter of the defocused welding spot is adapted to provide a conical welding spot which welds the first and second copper tracks without burning such tracks.

In realization modes:
Welding of the first copper layer on the second copper layer may comprise a succession of laterally offset welding spots done with laterally offset repetitive pulses of the defocused laser beam.

The method may comprise welding of more than one busbar copper conductors on more than one copper layers of a PCB, said more than one busbar copper conductors being welded on said more than one copper layers in a sequence allowing lower busbar conductors to be welded prior to upper busbar conductors partly or completely covering said lower busbar conductors.

Said laser beam may have a peak power of 10 kW to 15 kW.

A defocusing distance between the focal point and the surface of the upper copper layer to be welded may be set to obtain a widened keyhole welding spot having a diameter between 1 mm to 5 mm.

A defocusing distance between the focal point and the surface of the upper copper layer to be welded may be set between 15 mm to 20 mm.
said first copper layer may have a thickness of at least 200 micrometers.

Said second copper layer may have a thickness of 70 micrometers to 400 micrometers.

The present disclosure also concerns a power electronic equipment comprising a PCB having at least one PCB copper layer and comprising at least one busbar copper layer wherein said busbar copper layer is laser welded on said PCB copper layer with the method of the present disclosure.

Said at least one busbar copper layer may be part of a laminated busbar receiving one or more DC-Link capacitors and said PCB may be a prepackaged power module PCB, said busbar copper layer comprising a welding terminal forming said first coper layer and shaped to be applied onto said PCB copper layer.

Said welding terminal may be sized to receive several spaced welding spots made in accordance with the method of the present disclosure.

### Brief Description of Drawings

Other features, details and advantages will be shown in the following detailed description and on the figures, on which:
Figure 1 discloses a prior art welding attempt of a busbar conductor onto a copper track of a PCB;
Figure 2 discloses a prior art welding apparatus;
Figure 3 discloses a welding apparatus according to the present method;
Figures 4A and 4B show welding spots obtained with the present method respectively from above and in a side cut;
Figures 5A to 5C show steps of welding a two-layer busbar onto a power module;
Figure 6 shows an example laterally offset welding spots.

### Description of Embodiments

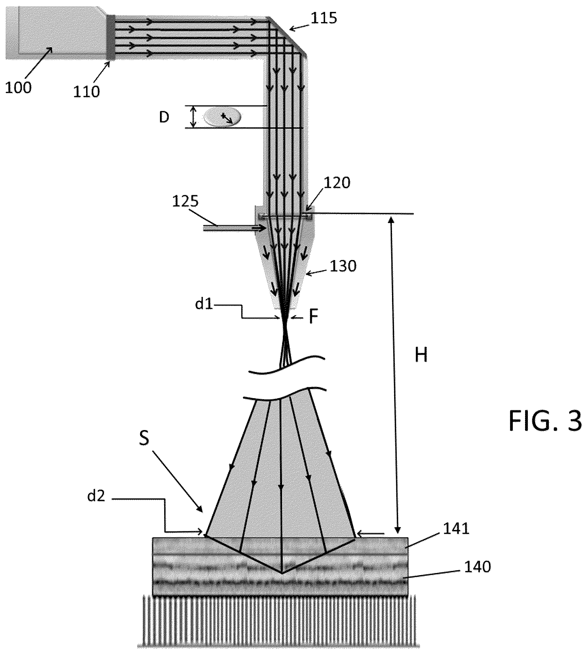

The invention proposed in this document is using laser welding method to interface prepackage cell to the external part of the converter system. The welding method associated with the coplanarity of layered busbar is keeping away the inductive parasitic and enhance the capacitive effect in between the potential facing each other as shown in Figure 2. In the same manner in Figure 3, PCB offers thick conductive layer for high current density application. The assembly process of the module using the present welding method to attach the prepackage cell to the busbar layer with high ration of copper thickness is the innovative point and have been verified experimentally to confirm the feasibility. Multiple cells can be attached in parallel or in series to form the total system and interconnect with the main elements of the circuit.

As discussed above, in the specific case of PCB, the presence of epoxy in the stack to be soldered is problematic since it is not compatible with the copper fusion temperature reached during welding. Moreover, the copper thickness involved in a PCB stack is usually thinner than the one in laminated or PCB busbar which makes a strong thickness scale ration during welding in between the top laminated busbar and the PCB underneath. In the other hand, in the case of die embedding thin chemical etching process is needed and can only be done on thin conductive layer, thus, a combination of thick and thin conductive material is not compatible on the same PCB layer. Interconnecting both, without degrading the electrical and thermal capability is the ideal packaging technique.

In figure 2 is described a laser system corresponding to the previously described figure 1 burned PCB welding attempt. In such configuration, a traditional welding station having an infrared laser source 100 of 1070 nm having a peak power of 10 kW to 15 kW and a pulse duration of 10 ms provides a laser beam 110 deflected with a mirror 115 and focused with a convex lens 121 on the surface of an upper copper track 141 having a thickness of about 200 micrometers. An air-cooling system 125, 130 limits temperature around the laser welding spot. An example of laser welding head for a welding station adapted to the present disclosure is known under reference YW52 from the company PRECITEC GmbH & Co. KG.

In such traditional system, the laser spot d1 is concentrated and has a reduced focal distance from focus of about 10 mm. In such a case as shown in figure 1 the copper tracks 141, 140 and the epoxy layer 150 are burned deeply in a narrow cone 145.

In figure 3, according to the present disclosure, the laser beam is defocused that is the laser system or lens 120 is lifted to have the convex lens at a height H providing a focal point F above the two copper tracks 141, 140 so that the diameter d2 of the defocused laser spot S at the level of the upper track surface is increased. In such a configuration depending on the defocusing which is the distance between the focal point and the surface of the upper copper track to be welded set between 15 mm to 20 mm, a pulse duration of about 10 ms provides welding of the two copper tracks of about 200 to 500 micrometers.

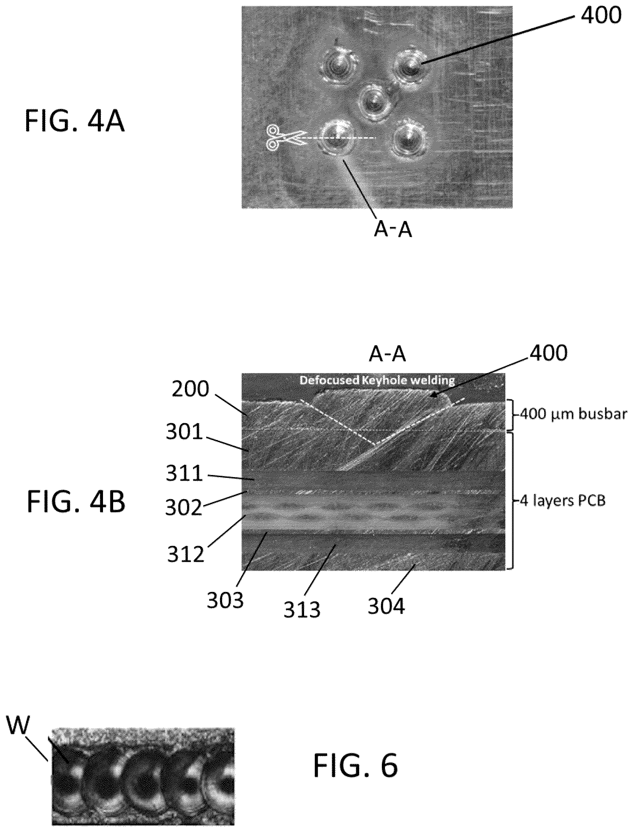

With such configuration, in a test sample of welding of the present method, keyhole welding spots 400 according to figures 4A and 4B have a diameter of about 1 mm to 5 mm with a dome surface and a conical shape. These welding spots are obtained on a busbar track having a 400 micrometers thickness while the upper track of the PCB has a thickness of about 600 micrometers. The depth of welding in tracks 200 and 301 is around 600 micrometers while the epoxy layers 311, 312 and 313 and the lower copper layers 302, 303, 304 remain unaffected by the welding method. The defocusing of the laser beam spreads the beam energy while a maximum of the beam energy remains in the center of beam providing a conical internal shape of the welding spot. In addition, a limited diffusion of the heat in the copper layers is provided through limiting the pulse duration. In the example of figure 4B, the depth of the melted copper in the lower layer 301 is reduced to about 200 micrometers. By increasing the defocusing, the depth of the melted copper in the lower layer may be reduced which allows welding of thin lower copper layers.

According to the method of the present disclosure a strong defocusing of the laser beam is used to have a good controllability of the depth of the copper melting area even if the copper layer on the PCB is of reduced thickness e.g. about 70 micrometers. Therefore, the epoxy layer under the copper of the PCB remains unaltered and functional. A short delay is also applied in the case of a thinner copper layer to let the metal cool down between two consecutive shots and avoid any heat conduction issue.

The defocusing method of the present disclosure allows strong contrast of copper thickness in between top and bottom copper layer and allows to solder a thick copper busbar having a thickness of 500 micrometers to 4 millimeters to a thin upper layer of a PCB having a thickness between 70 micrometers to 400 micrometers.

The tests done on laminated busbar having a thickness of 250 micrometers and 400 micrometers onto a 400 µm thick copper PCB layer have been successful with following parameters:

| | **PCB 400 µm/busbar 250 µm** | **PCB 400 µm/busbar 400 µm** |
|---|---|---|
| **Peak power** | 12 kW | 12 kW |
| **Pulse duration** | 10 ms | 10 ms |
| **Defocusing** | 18 mm | 16.5 mm |
| **Number of pulses** | 20 | 20 |
| **Delay between pulses** | 0.09 s | No delay |

In such experiment, the defocusing is the distance between the focal point and the surface of the upper copper track to be welded. When a thin lower layer or thin upper and lower layers need to be welded, the defocusing is set to reduce the height of the welding spot. The consequence is an increase of the diameter of the welding spot on the surface of the upper layer.

### Industrial Applicability

Based on the previous experimental validation, it is then possible to assemble PCB embedded prepackage cell onto a laminated or PCB busbar by laser welding mean. The key to this assembly is to use the busbar or PCB thick layer as a continuity of the PCB package with coplanarity and a maximum of capacitive interactions until the external component interconnection.

The number of welding points is proportional to the current density needed by the application and also depends on the diameter of the welding points.

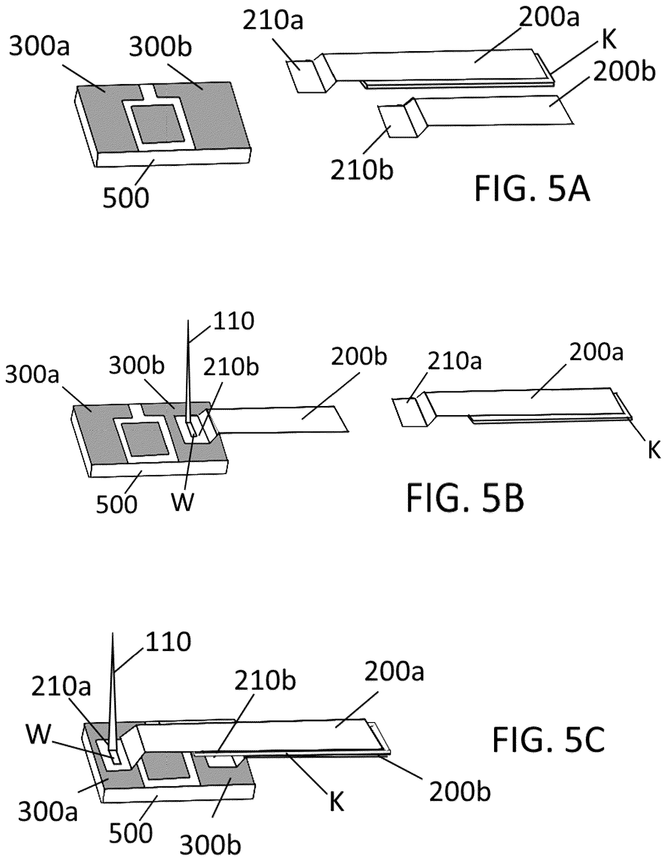

In figures 5A to 5C is disclosed a possible application to a prepackage cell 500 with a two-layer busbar having an upper busbar copper conductor 200a, an insulating layer K and a lower busbar copper conductor 200b.

In a first step the lower busbar copper conductor 200b is welded with the laser 110 on a first copper pad 300b. The welding is done on a plurality of welding spots as shown in figure 5D.

In a second step the upper busbar copper conductor 200a on top of the insulator K is welded with the laser 110 on a second copper pad 300a. The welding is also done on a plurality of welding spots W as shown in figure 6 obtained with laser beam shots laterally offset.

The method avoids the use of bolts to attach the busbar conductors onto PCB copper tracks such reducing the parasitic inductance of the assembly.

In a module corresponding to the schematics of figures 5A to 5C, the total assembly have been simulated with a total parasitic inductance of 4.2 nH with an additional 1.5 nH coming from the busbar assembly which is far from traditional screwed interconnections that would intrinsically add a minimum of 5 to 10 nH in a conventional power module.

### Advantages:

The technical solutions presented here can be used to assemble busbar with electronic modules.

The method allows to build one or multiple PCB packaged prepackage cell interconnected in parallel or in series to a laminated busbar made out of multi-layer of conductive material separated by dielectric material to provide a low inductive electrical connection.

The multilayer busbar is laser welded onto the prepackage cell using adapted laser source to the conductive layers involved in the interconnection.

The laser welding method can be used to weld two different PCB thicknesses allowing PCB design flexibility.

The same busbar can be used for inductive load design. In this case the laser welding provides a low impedance interconnection allowing high current transfer capability. It allows forming a transformer or an inductor based on foil stack up.

A wise selection of the laser pattern is used to provide good electrical and mechanical interconnection without degradation of both welded parts.

The busbar if cooled provides additional thermal path to extract power device losses. Surface of the interconnection and the direct copper to copper weld ensures minimum thermal contact resistance.

For the interconnection of a power switch gate and the kelvin source in the case of a transistor, a flexible PCB can be used as an interface in between the gate driver and the switching cell and be laser welded. The result is a low inductive assembly of one or many prepackage cell(s) in a more complex system such as a power converter. The busbar making the link to the external components without degrading the PCB packaged prepackage cell provides an advantage in terms of parasitic elements and provides qualitative electrical connection robust against mechanical vibration while providing excellent thermal extraction potential.

The invention defined by the attached claims is not limited to the above description and in particular the method in accordance with the appended claims may be applied to electronic equipment other than power modules in which connection of thick copper busbar tracks on PCB tracks is needed.

## Claims

1. - Laser welding method for welding electrical interconnections of power electronics equipment comprising a first copper layer (141, 200) on a second copper layer (140, 301) with a laser beam (110) emitted by a laser welding station from above the first copper layer across a convergent lens (120), wherein a height (H) of the convergent lens above said first copper layer (141) is adapted to provide a focal point (F) of said laser beam above the first copper layer in order to provide at least one defocused welding spot (S) on said first copper layer and wherein the first copper layer is a copper conductor (200, 200a, 200b) of a busbar and the second copper layer is part of an outer copper layer of a PCB having at least two copper layers (301, 302) separated by a dielectric layer (311).

2. - Laser welding method according to claim 1 wherein welding of the first copper layer on the second copper layer comprises a succession of laterally offset welding spots (W) done with laterally offset repetitive pulses of the defocused laser beam.

3. - Laser welding method according to claim 1 or 2 comprising welding of more than one busbar copper conductors (200a, 200b) on more than one copper layers (300a, 300b) of a PCB, said more than one busbar copper conductors being welded on said more than one copper layers in a sequence allowing lower busbar conductors to be welded prior to upper busbar conductors partly or completely covering said lower busbar conductors.

4. - Laser welding method according to any one of the preceding claims wherein said laser beam (110) has a peak power of 10 kW to 15 kW.

5. - Laser welding method according to any one of the preceding claims wherein a defocusing distance between the focal point and the surface of the upper copper layer to be welded is set to obtain a widened keyhole welding spot having a diameter between 1 mm to 5 mm.

6. - Laser welding method according to claim 7 wherein a defocusing distance between the focal point and the surface of the upper copper layer to be welded is between 15 mm to 20 mm.

7. - Laser welding method according to any one of the preceding claims wherein said first copper layer (141, 200) has a thickness of at least 200 micrometers.

8. - Laser welding method according to any one of the preceding claims wherein said second copper layer (140, 301) has a thickness of 70 micrometers to 400 micrometers.

9. - Power electronic equipment comprising a PCB (500) having at least one PCB copper layer (300a, 300b) and comprising at least one busbar copper layer (200a, 200b) wherein said busbar copper layer is laser welded on said PCB copper layer with the method of any one of claims 1 to 7.

10. - Power electronic device according to claim 8 wherein said at least one busbar copper layer is part of a laminated busbar receiving one or more DC-Link capacitors and said PCB is a prepackaged power module PCB, said busbar copper layer comprising a welding terminal (210a, 210b) forming said first coper layer and shaped to be applied onto said PCB copper layer.

11. - Power electronic device according to claim 9 wherein said welding terminal (210a, 210b) is sized to receive several spaced welding spots (W) made in accordance with the method of any one of claims 1 to 7.
